# EUROPÄISCHE PATENTANMELDUNG

(11) **EP 1 925 196 A2**
(43) Veröffentlichungstag der Anmeldung: **28.05.2008**
(21) Anmeldenummer: 07033550.0
(22) Anmeldetag: 14.11.2007
(51) Int. Cl.: A01C 7/12

(54) **Sämaschine**

(30) Priorität: 27.11.2006 DE 102006056256
(71) Anmelder: RAUCH LANDMASCHINENFABRIK GMBH, D-76547 Sinzheim (DE)
(72) Erfinder: Schickinger, Manfred, 76547 Sinzheim (DE); Schickinger, Harald, 76547 Sinzheim (DE); Kremser, Jérémie, 67660 Betschdorf (FR); Klein, Frédéric, 67500 Haguenau (FR)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Eine Sämaschine mit einem Saatgutbehälter mit wenigstens einer Auslauföffnung (2), einem daran anschließbaren Dosierschacht (3) und einer in dessen Seitenwänden (5,6) gelagerten Dosiereinrichtung (8), bestehend aus einem von außerhalb des Dosierschachtes (3) drehangetriebenen, axial verstellbaren Zellenrad (14) zum Dosieren von Normalsaat und in dessen Zellen (15) axial verstellbar angeordneten, leistenförmigen Füllkörpern (16), die an ihrem Umfang Dosierrillen (17) zum Dosieren von Feinsaat aufweisen, wobei an der dem Zellenrad (14) gegenüberliegenden Seite eine einzige Stelleinrichtung (9) mit einer Drehmomentstütze (24,25,26) zum Dosieren von Normalsaat und Feinsaat vorgesehen ist, zeichnet sich dadurch aus, dass beide Seitenwände (5,6) des Dosierschachtes (3) Öffnungen (44,43) mit gleichem Innendurchmesser für die Lagerung der Stelleinrichtung (9) und der Dosiereinrichtung (8) aufweisen, und dass beide Seitenwände (5,6) zur wahlweisen Anbringung der wenigstens einen Drehmomentstütze (24,25,26) an der einen oder anderen Seitenwand eingerichtet sind und die Dosiereinrichtung (8) wahlweise von der einen (5) oder von der anderen Seitenwand (6) her einbaubar ist.

## Beschreibung

Die Erfindung betrifft eine Sämaschine mit einem Saatgutbehälter mit wenigstens einer Auslauföffnung, einem daran anschließbaren Dosierschacht und einer in dessen Seitenwänden gelagerten Dosiereinrichtung, bestehend aus einem von außerhalb des Dosierschachtes drehangetriebenen; axial verstellbaren Zellenrad zum Dosieren von Normalsaat, dessen Zellen an ihrer im Dosierschacht liegenden Stirnseite durch die Stirnseite einer mit dem Zellenrad axial beweglichen, in der gegenüberliegenden Seitenwand geführten, drehfesten Hülse begrenzt sind, in den Zellen axial verstellbar angeordneten, leistenförmigen Füllkörpern, die an ihrem Umfang Dosierrillen zum Dosieren von Feinsaat aufweisen und an der diesseitigen Seitenwand durch ein axialfestes, mitdrehendes Lagerteil mit einer Art Innenverzahnung begrenzt sind, während der stirnseitige Abschluss der Zellen des Zellenrades beim Dosieren von Normalsaat an dieser Seitenwand durch das Lagerteil und den mit ihm etwa bündigen Stirnseiten der Füllkörper gebildet ist, wobei an der dieser Seitenwand gegenüberliegenden Seite eine einzige Stelleinrichtung mit einer Drehmomentstütze zum Dosieren von Normalsaat und Feinsaat vorgesehen ist, die axial auf die Hülse und das Zellenrad wirkt und wahlweise mit einem axialfesten, mitdrehenden Teil an der gegenüberliegenden Seite für die Einstellung der Dosiermenge für Normalsaat oder mit dem Zellenrad zum Mitführen der Füllkörper für die Einstellung der Dosiermenge für Feinsaat kuppelbar ist.

Eine solche Sämaschine mit pneumatischer Förderung des Saatgutes ist Gegenstand der EP 0 635 195 B1. Sie hat sich in der Praxis bewährt und ermöglicht insbesondere eine einwandfreie Dosierung von Normalsaat, z.B. alle Getreidearten und Hülsenfrüchte, sowie von Feinsaat, wie Raps, Gras, Mohn, aber auch von fein gemahlenem Kalk. Das dosierte Saatgut gelangt von der Dosiereinrichtung in eine Injektorschleuse, in der es von einem pneumatischen Förderstrom erfasst wird, der das Förderluft-/Saatgut-Gemisch über eine Steigleitung zu einem oben liegenden Verteilerkopf führt, wo es auf eine Vielzahl von zu den Säscharen führenden Säleitungen gleichmäßig aufgeteilt wird.

Eine Sämaschine mit ähnlicher Dosiereinrichtung beschreibt die EP 1 530 890 A1. Soweit die Erfindung betroffen ist, geht die Offenbarung dieses Dokumentes nicht über den Inhalt der den Oberbegriff des Patentanspruchs 1 bildenden EP 0 635 195 B1 hinaus.

Die bekannte Dosiereinrichtung hat den Vorteil, dass einerseits mit einem einzigen Drehantrieb, der üblicherweise von dem Spornrad der Sämaschine abgeleitet ist, aber auch als autonomer, z.B. elektrischer oder hydraulischer Antrieb ausgebildet sein kann, sowohl Normalsaat als auch Feinsaat durch das umlaufende Zellenrad bzw. die eingeschobenen Füllkörper volumendosiert abgegeben wird und zum wahlweisen Dosieren von Normalsaat oder Feinsaat lediglich eine einzige Stelleinrichtung zur Verschiebung entweder nur des Zellenrades oder des Zellenrades mit den Füllkörpern erforderlich ist. Die Dosiermenge wird dann durch den Stellweg des Zellenrades innerhalb des Auslaufschachtes, d.h. durch die innerhalb desselben liegende freie Länge der Zellen bzw. der Dosierrillen der Füllkörper bestimmt. Die Dosiermenge lässt sich an einer feststehenden Skala, gegenüber der die Dosiereinrichtung axial bewegt wird, einstellen. Mit dieser Ausbildung lassen sich in der Praxis Normalsaat bis zu einigen 100 kg/ha und Feinsaat bis hinunter zu 1,5 kg/ha volumendosiert ausbringen.

In der Fertigungstechnik, Lagerhaltung und Anwendungspraxis der Dosiereinrichtung ergeben sich jedoch folgende Probleme: Eine pneumatische Sämaschine als in sich geschlossene Baueinheit wird in sehr unterschiedlicher Weise eingesetzt. Desgleichen ist die Anordnung des Gebläses an sehr unterschiedliche Einbaubedingungen gebunden. So kann die Sämaschine von dem Dreipunktgestänge eines Traktors aufgenommen und nach vorangegangener Bodenbearbeitung eingesetzt werden. Stattdessen kann sie auch als gezogene Maschine - wiederum nach vorangehender Bodenbearbeitung - an einen Traktor angehängt werden. Schließlich kann sie als Kombinationsgerät auf einem gezogenen aktiven oder passiven Bodenbearbeitungsgerät aufgebaut werden, so dass die Bodenbearbeitung und das Einbringen der Saat in den Boden in einem Arbeitsgang erfolgt. Dies und die an die jeweiligen Platzverhältnisse angepasste Anordnung des Gebläses, und des Injektors bringen es mit sich, dass die Dosiereinrichtung unterschiedlich eingebaut werden muss und hierfür jeweils andere Anbaumaße zu berücksichtigen sind. Auch die Einleitung des Antriebs für die Dosiereinrichtung muss den jeweiligen Verhältnissen angepasst werden.

Diese Umstände zwingen den Hersteller von Sämaschinen, sich zunächst genaue Kenntnis über die Einbaubedingungen zu verschaffen und daran angepasst die Dosiereinrichtung auszulegen und einzubauen. Damit ist ein hoher Fertigungsaufwand und eine aufwendige Lagerhaltung verknüpft und müssen ferner bei der Montage die entsprechenden Einsatzbedingungen beachtet werden.

Der Erfindung liegt die Aufgabe zugrunde, im Bereich der Übergabe des Saatgutes vom Saatgutbehälter an die Dosiereinrichtung einen Aufbau vorzuschlagen, der einen universellen Einsatz der Bauteile bei Saatgutbehältern bzw. Tragrahmen unterschiedlicher Art bei unterschiedlichen Einsatzbedingungen der Sämaschine (aufgesattelt, angehängt, auf Bodenbearbeitungsgerät aufgebaut) und bei unterschiedlichem Gebläse-Einbau und Injektoranordnung und bei unterschiedlicher Antriebsführung ermöglicht. Gleichzeitig soll die Funktion und der Einsatzbereich des Dosiergerätes verbessert werden.

Diese Aufgabe wird bei der eingangs genannten und den Oberbegriff des Anspruchs 1 bildenden Sämaschine zunächst dadurch gelöst, dass beide Seitenwände des Dosierschachtes Öffnungen mit gleichem Innendurchmesser für die Lagerung der Hülse bzw. des Lagerteils aufweisen, und dass beide Seitenwände zur wahlweisen Anbringung der wenigstens einen Drehmomentstütze an der einen oder anderen Seitenwand eingerichtet sind und die Dosiereinrichtung wahlweise von der einen Seitenwand oder von der anderen Seitenwand her einbaubar ist.

Durch die erfindungsgemäße Ausbildung ist es zunächst möglich, die Antriebsseite auf der rechten oder der linken Seite des Dosierschachtes und umgekehrt die Stelleinrichtung für die Einstellung der Dosiermenge von Normalsaat oder Feinsaat an der jeweils gegenüberliegenden Seitenwand anzuordnen. Damit können ferner der Dosierschacht und die Dosiereinrichtung unabhängig von dem konkreten Einsatz den gleichen Aufbau aufweisen, so dass die Fertigung und insbesondere auch die Lagerhaltung und Montage vereinfacht wird. An einer erfindungsgemäß ausgebildeten Sämaschine kann im Bedarfsfall die Dosiereinrichtung und die Stelleinrichtung wahlweise von der einen Seitenwand auf die andere umgesetzt werden.

In einer vorteilhaften Ausgestaltung ist vorgesehen, dass an der Seite der Dosiereinrichtung ein Drehlager, z.B. ein Wälzlager, mit Abstand von der Seitenwand vorgesehen ist, dessen feststehender Außenring an der Seitenwand lösbar befestigt ist, und dass die gegenüberliegende Seitenwand des Auslaufschachtes symmetrisch angeordnete Befestigungsmöglichkeiten aufweist.

Damit befindet sich das Wälzlager nicht unmittelbar in der Antriebsdurchführung (Öffnung) der Seitenwand, so dass durch den dort zwischen Öffnungsrand und Lagerteil vorhandenen Lagerspalt austretender Feinstaub zwischen der Seitenwand und dem Wälzlager nach unten herausfallen kann, ohne in das Wälzlager einzudringen.

Zweckmäßigerweise ist vorgesehen, dass der feststehende Außenring des Wälzlagers von Teilringschalen umgriffen ist, die mittels Löcher in der Seitenwand durchgreifender Schrauben befestigt sind, und dass beide Seitenwände gleiche Lochbilder aufweisen.

Die Schrauben werden zweckmäßigerweise von der Innenseite der Seitenwand nach außen in die Teilringschalen eingeschraubt, so dass diese außenseitig glatt bleiben.

Eine Ausführungsform der Erfindung zeichnet sich dadurch aus, dass an der Hülse außerhalb der Seitenwand eine sie umfangsseitig überragende Platte befestigt ist, die auf wenigstens drei radialsymmetrisch angeordneten Stangen mit Spiel geführt ist, dass die Stangen einerseits an der Seitenwand lösbar befestigt sind, andererseits an ihren anderen Enden durch eine Platte verbunden sind, und dass zwischen beiden Platten ein Spindelantrieb zum axialen Verstellen der Hülse und nur des Zellenrades oder des Zellenrades mit den Füllkörpern wirksam ist, wobei die gegenüberliegende Seitenwand gleiche symmetrische Befestigungsmöglichkeiten für die Stangen aufweist.

Die drei radialsymmetrischen Stangen sorgen einerseits für eine einwandfreie Führung der an der Hülse befestigten Platte, andererseits nehmen sie eventuelle Kippmomente von der exzentrisch angeordneten Spindel, die in der äußeren Platte gelagert ist und mit ihrem Gewinde in einer Spindelmutter an der an der Hülse befestigten Platte läuft, auf.

Zweckmäßigerweise weisen beide Seitenwände drei radialsymmetrisch angeordnete Löcher zum wahlweisen Befestigen der Stangen an der einen oder anderen Seitenwand mittels Schrauben auf.

Eine besonders vorteilhafte Ausführungsform der Erfindung zeichnet sich dadurch aus, dass die Dosiereinrichtung eine zentrale Welle aufweist, auf der das Zellenrad drehfest sitzt und die die Hülse in Lagern durchgreift und diese sowie an der gegenüberliegenden Seite das Zellenrad mit einem Wellenstumpf überragt.

Das Zellenrad mit den großen Zellen für die Dosierung von Normalsaat ist vorzugsweise aus PU hergestellt und kann beispielsweise durch mechanische Mittel oder durch Kleben mit der Welle drehfest verbunden sein. Das Antriebsmoment kann über ein axialfestes Stirnrad und das Lagerteil mit dessen Innenverzahnung auf die Füllkörper und das Zellenrad übertragen werden. Statt dessen kann das Drehmoment auch von außen über den einen oder anderen Wellenstumpf wiederum über ein darauf sitzendes Stirnwand, einen Wellenanschluss oder auch über einen autonomen Antrieb eingeleitet werden.

Die die Dosiereinrichtung nach beiden Seiten überragenden Wellenstümpfe der Welle, die beispielsweise von dem Spornrad der Sämaschine über ein Ritzel und ein Stirnrad fahrgeschwindigkeitsabhängig angetrieben wird, sind mit Mitteln ausgestattet, die die Antriebsverbindung zu einer entsprechend ausgebildeten Dosiereinrichtung in Reihen- oder Parallelschaltung ermöglichen.

So ist es beispielsweise möglich, in Fahrtrichtung hintereinander liegende Dosiereinrichtungen über einen einzigen Antrieb anzutreiben. In diesem Fall ist zwischen den Wellenstümpfen der beiden Dosiereinrichtungen vorzugsweise eine sie verbindende Gelenkwelle vorgesehen. In Verbindung mit dem wahlweisen Einbau der Dosiereinrichtung von der einen oder der anderen Seitenwand her sowie der umgekehrten Einbaumöglichkeit der Stelleinrichtung ergeben sich bei gleichen Bauteilen von Dosierschacht und Dosiereinrichtung vielfältige Kombinationsmöglichkeiten.

Ebenso ist es möglich, zwei parallel zueinander, beispielsweise auch zur Fahrtrichtung, liegende Dosiereinrichtungen über die Wellenstümpfe, z.B. über mit ihnen drehfest verbundene Stirnräder, zu kuppeln, wobei die Stelleinrichtung jeweils an der gleichen Seite angeordnet sein kann. Die Zellenräder können dann je nach Art der Kupplung gleichsinnig oder gegensinnig drehen.

Die Welle ist vorteilhafterweise einerseits in dem außenliegenden Wälzlager, andererseits mit ihrem Wellenstumpf an der gegenüberliegenden Seite in einem Wälzlager in der Hülse gelagert. Der Innenring des letzteren Wälzlagers kann durch einen Wellensicherungsring auf dem Wellenstumpf axial gesichert sein und durch Lösen desselben die Welle leicht entnommen werden, um den Einbau wahlweise in der einen oder anderen Richtung zu ermöglichen.

In weiterhin vorteilhafter Ausführung ist vorgesehen, dass die Auslauföffnung einen quadratischen Querschnitt und der Dosierschacht eine Zulauföffnung mit gleichem quadratischem Querschnitt aufweist.

Damit sind unabhängig von den Einbaubedingungen gleiche Anschlussmaße für den Dosierschacht an der Auslauföffnung des Saatgutbehälters möglich; so dass auch insoweit eine große Variationsbreite, z.B. durch Drehen der Dosiereinrichtung um 90°, 180° oder 270° gegeben ist. Dieser Vorteil kommt insbesondere bei den üblicherweise verwendeten Saatgutbehältern mit zwei sich trichterförmig zu je einer Auslauföffnung verjüngenden Behälterteilen zur Wirkung, bei denen der Dosierschacht mit der Dosiereinrichtung bei entsprechender Ausrichtung derselben wahlweise mit der einen oder der anderen Auslauföffnung verbunden werden kann und das dosierte Saatgut nach jeweils gegenüberliegenden Seiten abgegeben wird.

In nicht notwendiger Verbindung mit der Erfindung zeichnet sich die Dosiereinrichtung mit dem Zellenrad und den Füllkörpern dadurch aus, dass jeder Füllkörper einen Mittelsteg mit einem auf dem kopfseitigen Umfang der Stege des Zellenrads liegenden Umfang und zu beiden Seiten des Mittelstegs eine Dosierrille aufweist, wobei die, kopfseitige Breite des Mittelstegs und die Öffnungsweite der beiden Dosierrillen etwa gleich ist.

Durch diese Ausbildung stehen zwischen zwei benachbarten Stegen des Zellenrades für Normalsaat zwei Dosierrillen für Feinsaat zur Verfügung, so dass bei entsprechend geringer Tiefe der Dosierrillen eine feine, pulsationsfreie Dosierung kleinster Volumina möglich ist. Praktische Versuche haben gezeigt, dass bei dieser Ausbildung Feinsaat, wie Raps, Gras, Mohn oder auch fein gemahlener Kalk, mit einer Dosiermenge bis hinunter zu 0,8 kg/ha ausgebracht werden können. Berücksichtigt man ferner, dass mit dem Zellenrad Normalsaat bis zu einigen 100 kg/ha ausgebracht werden kann, zeigt sich die große Bandbreite der Dosierung, die mit der erfindungsgemäßen Ausbildung abgedeckt wird.

In die Nähe dieser Untergrenze der Dosiermenge konnte man bisher nur gelängen, wenn auswechselbare Dosierwalzen mit unterschiedlicher Konfiguration und Größe der Dosiervertiefungen eingesetzt werden. Dies erfordert einen, gegebenenfalls mehrfachen Umbau der Dosiereinrichtung für den Fall, dass Feinsaat ausgebracht werden soll (Prospekt HORSCH Pronto DC/AS der Firma Horsch Maschinen GmbH). Ferner setzt diese Bauweise einen regelbaren Antrieb, z.B. einen Elektromotor voraus, da das Dosiervolumen des einzelnen Zellenrades nicht verändert werden kann. Da das Ausbringen der Saat fahrgeschwindigkeitsabhängig erfolgen muss, ist ferner ein entsprechender Regelkreis erforderlich.

In weiterer Ausgestaltung ist vorgesehen, dass jeder Füllkörper die Dosierrillen an der dem Mittelsteg abgekehrten Seite begrenzende schmale Seitenstege aufweist und dass jeder Seitensteg dem Steg der Zellen des Zellenrades bis zum Umfang anliegt, so dass die schmalen Seitenstege der Dosierrillen benachbarter Füllkörper mit dem zwischen ihnen befindlichen Steg der Zellen des Zellenrades gemeinsam einen Trennsteg für benachbarte Dosierrillen von benachbarten Füllkörpern bilden.

Die Seitenstege der beiden Dosierrillen eines Füllkörpers dienen zum einen der Führung des Füllkörpers in den an der einen Seitenwand gelagerten, zahnradförmigen Lagerteil, andererseits der Begrenzung der Dosierrillen eines Füllkörpers zu den benachbarten Stegen der Zellen des Zellenrades.

Mit Vorteil ist vorgesehen, dass die kopfseitige Breite des Mittelstegs einerseits und die Summe der kopfseitigen Breite der Stege des Zellenrades und der diesen beidseitig anliegenden schmalen Seitenstege der Füllkörper andererseits etwa gleich groß ist. Damit ist eine pulsationsfreie Dosierung und Ausbringung der Feinsaat gewährleistet.

Um bei Feinsaat zu kleinstmöglichen Dosiermengen, also zu kleinstmöglichen Volumina, an den Dosierrillen zu kommen, ist die Öffnungsweite jeder Dosierrille schmaler als die kopfseitige Breite des Mittelstegs. Ferner kann das Dosiervolumen noch durch die Tiefe der Dosierrillen beeinflusst werden.

Weitere Einzelheiten und Vorteile der Erfindung ergeben sich aus der folgenden Beschreibung von in der Zeichnung wiedergegebenen Ausführungsbeispielen. In der Zeichnung zeigen:
- Fig. 1: eine perspektivische Ansicht auf den Zulauf- und Dosierschacht in Blickrichtung auf das Zellenrad;
- Fig. 2: eine der Fig. 1 entsprechende perspektivische Ansicht mit Blickrichtung auf die gegenüberliegende Seite mit der Stelleinrichtung;
- Fig. 3: einen Längsschnitt durch die Dosiereinrichtung in der Dosierstellung für Normalsaat;
- Fig. 4: einen der Fig. 3 entsprechenden Längsschnitt in der Dosierstellung für Feinsaat;
- Fig. 5: einen Radialschnitt V-V gemäß Fig. 3;
- Fig. 6: einen Radialschnitt VI-VI gemäß Fig. 4;
- Fig. 7: eine Ansicht auf zwei Dosiereinrichtungen in Reihenschaltung;
- Fig. 8: eine der Fig. 7 entsprechende Ansicht einer abgewandelten Reihenschaltung und
- Fig. 9: eine Ansicht zweier Dosiereinrichtungen in Parallelschaltung.

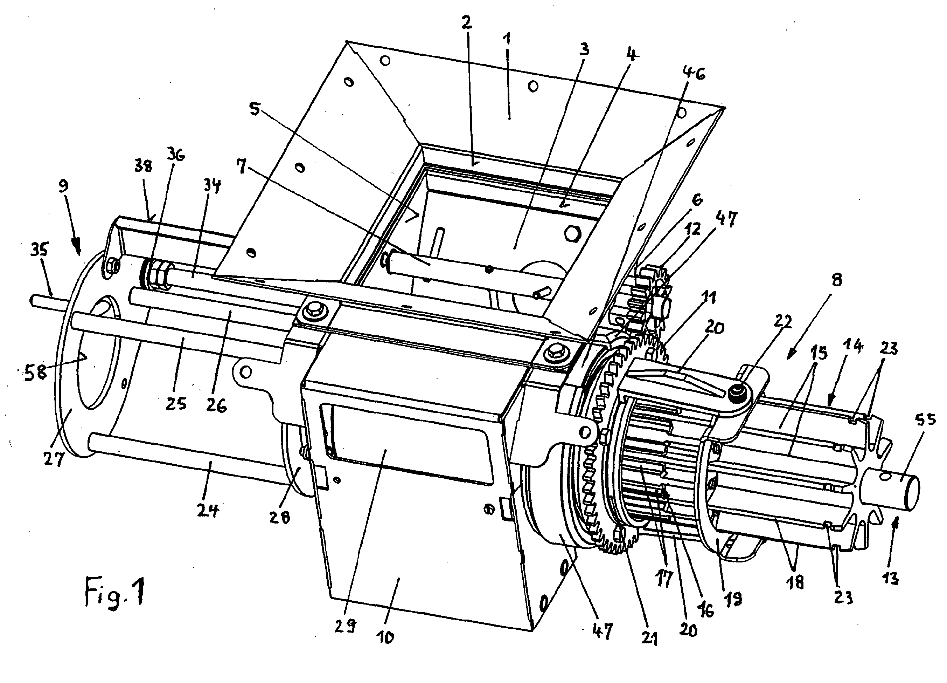

Von dem Saatgutbehälter ist in Fig. 1 lediglich der untere trichterförmige Zulaufschacht 1 mit einer Auslauföffnung 2 mit quadratischem Querschnitt wiedergegeben. An diesen schließt sich nach unten der Dosierschacht 3 mit einer gleichen quadratischen Zulauföffnung 4 an. In den Seitenwänden 5, 6 des Dosierschachtes ist ein Rührwerk 7 und darunter eine insgesamt mit 8 bezeichnete Dosiereinrichtung gelagert, die mittels einer an der gegenüberliegenden Seite des Dosierschachtes 3 angeordneten Stelleinrichtung 9 zur Einstellung unterschiedlicher Dosiervolumina betätigbar ist. Das dosierte Saatgut gelangt von der Dosiereinrichtung 8 in einen Ausbringschacht 10 und von dort beispielsweise in den Injektor einer pneumatischen Förderanlage, mittels der das Saatgut über einen geeigneten Verteiler auf zu den Säscharen führende Säleitungen aufgeteilt wird. Einzelheiten der Dosiereinrichtung 8 und der Stelleinrichtung 9 sind weiter unten beschrieben.

Aufgrund der gleichen quadratischen Querschnitte der Auslauföffnung 2 und der Zulauföffnung 4 kann der Dosierschacht 3 mit der Dosiereinrichtung 8 und der Stelleinrichtung 9 je nach Einbaubedingungen um 90°, 180° oder 270° gedreht an dem trichterförmigen Zulaufschacht des Saatgutbehälters montiert werden.

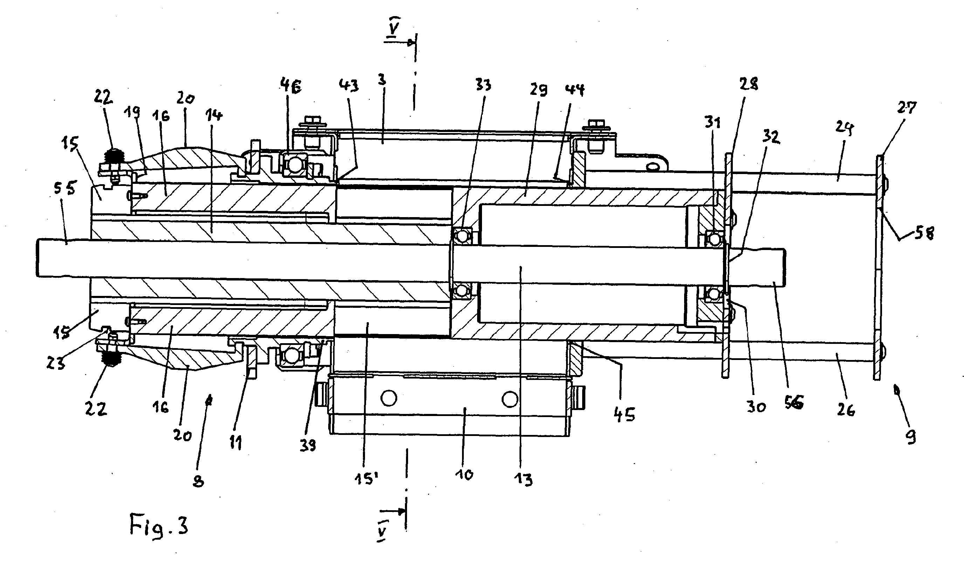

Die Dosiereinrichtung 8 wird bei der gezeigten Ausführungsform in bekannter Weise von dem Spornrad der Sämaschine über ein auf das Stirnrad 11 wirkendes Ritzel angetrieben. Der Drehantrieb der Dosiereinrichtung 8 erfolgt also fahrgeschwindigkeitsabhängig. Über das Stirnrad 11 wird ferner ein ausrückbares Ritzel 12 auf einer Welle des Rührwerks 7 angetrieben. Die Dosiereinrichtung 8 weist ein Zellenrad 14 mit großvolumigen Zellen 15 zur Dosierung von Normalsaat auf. Das Zellenrad 14, das beispielsweise aus PU besteht, sitzt drehfest auf der Welle 13, ist beispielsweise mit dieser verklebt. Das Zellenrad 14 ist mit der Welle 13 gegenüber dem Stirnrad 11 mittels der Stelleinrichtung 9 axial verschiebbar. Die Drehmomentübertragung von dem Stirnrad 11 auf die Welle 13 erfolgt über die in den Zellen 15 des Zellenrades 14 getrennt axial verschieblich geführten Füllkörper 16, die an ihrem Umfang kleinvolumige Dosierrillen 17 für Feinsaat aufweisen, auf die noch später im Einzelnen eingegangen wird. In die Dosierrillen 17 greift ein mit dem Stirnrad 11 drehfest verbundenes und in der Seitenwand 6 des Auslaufschachtes 3 gelagertes Lagerteil 39 mit einer Art Innenverzahnung ein. Bei der gezeigten Ausführungsform wird das Drehmoment am Stirnrad 11 über das Lagerteil 39 (s. Fig. 3, 4 und 6), die Dosierrillen 17, die Füllkörper 16 und von diesen über die die Zellen 15 des Zellenrades begrenzenden Stege 18 auf die Welle 13 übertragen.

Die Füllkörper 16 sind an ihrem außen liegenden Ende an einem Tragring 19 befestigt, an dem zwei diametral gegenüberliegende Klauen 20 federnd und schwenkbar gelagert sind. Die Klauen 20 können wahlweise in eine Ringnut 21 am Stirnrad 11 (s. Position in Fig. 1) oder durch Verschwenken um das abgefederte Lager 22 am Tragring 19 in Querrillen 23 an den Stegen 18 im Bereich des äußeren Endes des Zellenrades 14 eingelegt werden. In der in Fig. 1 gezeigten Stellung für die Dosierung von Normalsaat ist nur das Zellenrad 14 mittels der Stelleinrichtung 9 axial (in Fig. 1 nach links) verschiebbar und in den Auslaufschacht 3 hinein bewegbar, während die Füllkörper 16 mit den Dosierrillen 17 über den Tragring 19 und die in die Ringnut 21 eingreifenden Klauen 20 axial gehalten sind. In dieser Position schließen die Füllkörper mit ihrem dem Tragring 19 abgekehrten Ende etwa bündig mit der Innenseite der Seitenwand 6 des Auslaufschachtes 3 ab. Für die Dosierung von Feinsaat werden die Klauen 20 in die Querrillen 23 an den Stegen 18 des Zellenrades 14 umgelegt, so dass die Füllkörper 16 mit den Dosierrillen 17 für Feinsaat über den Tragring 19 beim axialen Verschieben des Zellenrades 14 in den Auslaufschacht 3 mitgenommen werden.

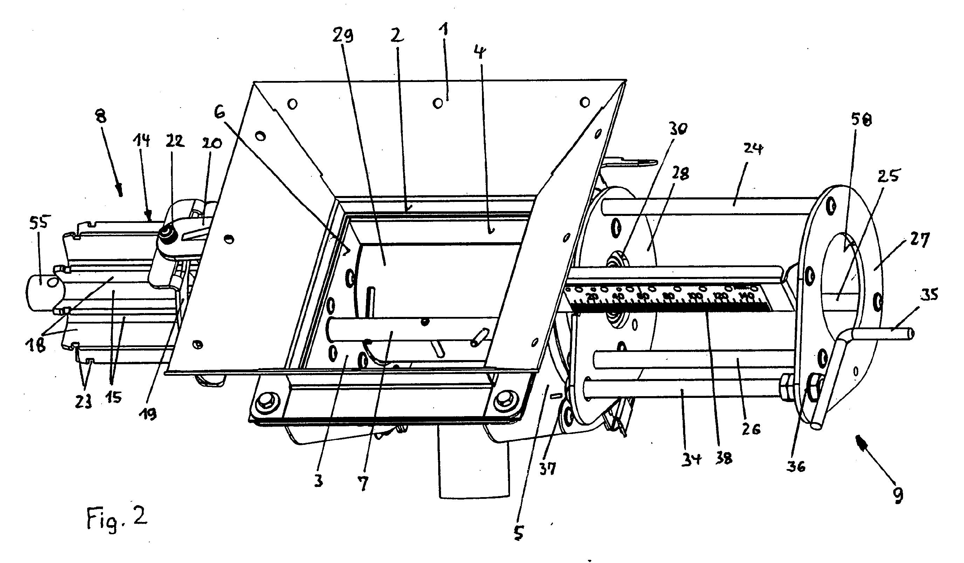

Die Stelleinrichtung 9 gemäß Fig. 2 weist eine über drei Stangen 24, 25 und 26 an der Seitenwand 5 des Dosierschachtes 3 fest abgestützte Platte 27 auf. Die Stangen 24, 25 und 26 sind radialsymmetrisch angeordnet und dienen als Führungen für eine Platte 28, die an der außenliegenden Stirnseite einer Hülse 29 befestigt ist, die sich in der Nullstellung (Dosiermenge O kg/ha) vollständig im Dosierschacht 3 befindet. Die Platte 28 weist eine Öffnung 30 auf, die von der Welle 13 durchgriffen ist. Im Bereich der Öffnung 30 ist die Welle 13 in einem Wälzlager 31 der Hülse 29 gelagert und steht über einen Wellensicherungsring 32 in Wirkverbindung mit dem Innenring des Wälzlagers 31 (Fig. 3). Die Welle 13 ist über ein weiteres Wälzlager 33 in der Hülse im Bereich der das Zellenrad 14 bzw. dessen Zellen 15 abschließenden Stirnseite gelagert.

Die Hülse 29 ist mittels der an den Stangen 24, 25 und 26 geführten Platte 28 drehfest angeordnet und zusammen mit der Welle 13 axial verschiebbar. Hierzu dient eine Schraubenspindel 34 mit einer Handhabe 35. Die Spindel 34 ist in der stationären Platte 27 bei 36 gelagert und läuft mit ihrem Gewinde in einer Spindelmutter 37 an der mit der Hülse 29 verbundenen Platte 28. Zwischen der Seitenwand 5 des Auslaufschachtes 3 und der stationären Platte 27 ist eine Skala 38 aufgespannt, mit der als Ablesemarke eine Kante der axial beweglichen Platte 28 zusammenwirkt.

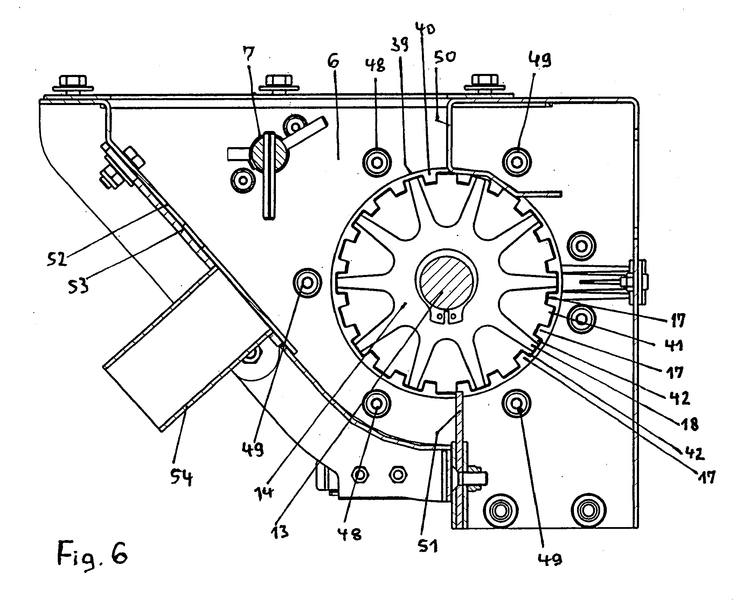

Durch Drehen der Handhabe 35 im Uhr- oder Gegenuhrzeigersinn werden die Platte 28, die Hülse 29 und die Welle 13 und - in der in Fig. 3 gezeigten Position der Klauen 20 - nur das Zellenrad 14 axial verschoben. Auf diese Weise kann die innerhalb des Dosierschachtes 3 befindliche freie axiale Länge 15' (s. Fig. 3) der Zellen 15 des Zellenrades 14 unter Zuhilfenahme der Skala 38 auf die gewünschte Dosiermenge für Normalsaat eingestellt werden. Die Füllkörper 16 sind bei dieser Verschiebung des Zellenrades 14 mittels der in die Ringnut 21 am Stirnrad 11 eingreifenden Klauen 20 axial fixiert und schließen mit ihrer dem Dosierschacht 3 zugewandten Stirnseite mit der Innenseite der Seitenwand 6 bündig ab. Die Dosierrillen 17 der Füllkörper 16 sind im Bereich der Seitenwand 6 durch ein Lagerteil 39 (S. Fig. 3, 4 und 6) ausgefüllt, das zu diesem Zweck eine Art Innenverzahnung 40 aufweist (s. Fig. 6) und gleichfalls mit der Innenseite der Stirnwand bündig und axialfest abschließt. Das Lagerteil 39 ist in einer Öffnung 43 der Seitenwand 6 des Dosierschachtes gelagert. An der gegenüberliegenden Seite ist die Hülse 29 in einer Führung 45 geführt, die in einer Öffnung 44 der Seitenwand 5 des Dosierschachtes 3 sitzt. Die Öffnungen 43, 44 weisen gleichen Innendurchmesser auf.

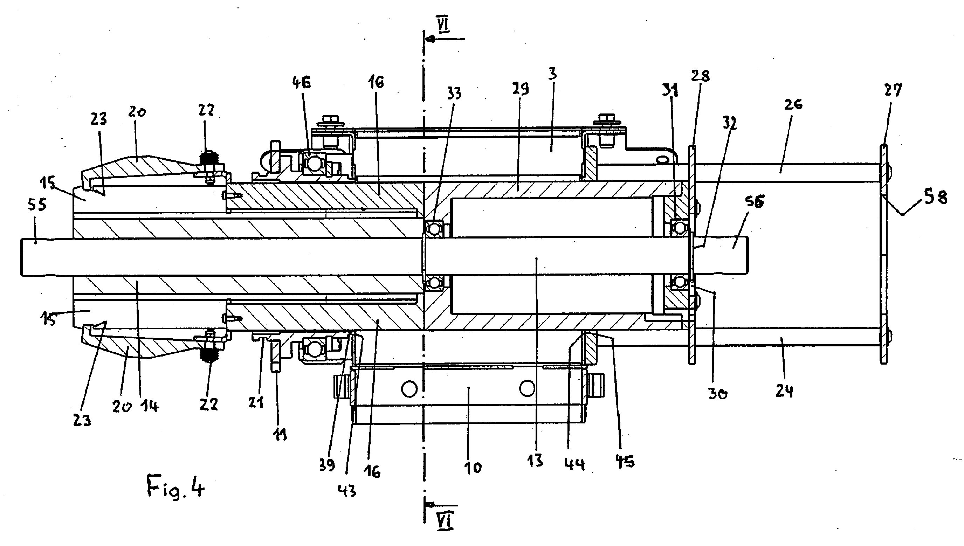

Zum Dosieren von Feinsaat wird zunächst die Antriebswelle mit dem Zellenrad 14 mittels der Spindel 34 in Fig. 3 so weit nach rechts bewegt, bis die Hülse 29 den Dosierschacht ausfüllt und das Zellenrad eine Position erreicht hat (Fig. 4), in der die Klauen in die Querrillen 23 der Zellenradstege 18 eingelegt werden können. Durch anschließendes Drehen der Schraubenspindel in umgekehrter Drehrichtung wandert das Zellenrad 14 zusammen mit den Füllkörpern 16 und deren Dosierrillen 17 für die Feinsaat in den Dosierschacht 3. Die für die gewünschte Dosiermenge maßgebliche freie axiale Länge der Dosierrillen 14 innerhalb des Dosierschachtes 3 lässt sich wiederum an der Skala 38 einstellen.

Wie aus Fig. 6 ersichtlich, weist jeder Füllkörper 16 zwei Dosierrillen 17 auf, die durch einen breiten Mittelsteg 41 getrennt sind. Die umfangsseitige Öffnungsweite jeder Dosierrille ist schmaler als die kopfseitige Breite des Mittelstegs. Ferner wird jede Dosierrille 17 an ihrer dem Mittelsteg 41 gegenüberliegenden Seite durch einen Seitensteg 42 begrenzt, der zusammen mit dem Steg 18 des Zellenrades, 14 und dem diesen anliegenden Seitensteg 42 des benachbarten Füllkörpers 16 einen Trennsteg zwischen benachbarten Dosierrillen benachbarter Füllkörper bildet. Die kopfseitige Breite des Mittelstegs 41 und die Summe der kopfseitigen Breite zweier Seitenstege 42 und des zwischen ihnen eingeschlossenen Stegs 18 des Zellenrades sind etwa gleich groß.

Das Stirnrad 11 und die Welle 13 sind, wie aus Fig. 3 und 4 ersichtlich, mit Abstand von der Seitenwand 6 des Dosierschachtes 3 in einem Wälzlager 46 gelagert, so dass dieses durch eventuellen Staub, der zwischen der Öffnung 43 und dem Lagerteil 39 durchdringt und nach unten fällt, nicht beeinträchtigt wird. Auch aus diesem Grund sitzt der Außenring des Wälzlagers 46 zwischen zwei ihn umfassenden Teilringschalen 47 aus Kunststoff von jeweils etwa 150° (s. Fig. 1). Mittels der Teilringschalen 47 ist der Außenring des Wälzlagers 46 an der Seitenwand 6 des Dosierschachtes 3 von innen her lösbar befestigt. Zu diesem Zweck sind an beiden Seitenwänden 5, 6 des Dosierschachtes drei radialsymmetrisch angeordnete Löcher für den Durchgriff von Schrauben 48 vorgesehen, die von der Innenseite der Seitenwand her in Innengewinde der Teilringschalen 47 eingedreht werden können. In radialsymmetrischem Versatz hierzu wiederum sind drei radialsymmetrisch angeordnete Löcher für den Durchgriff von Schrauben 49 vorgesehen, die von der Innenseite der Seitenwände in Innengewinde am Kopf der Stangen 24, 25 und 26 eingedreht werden können. Auf diese Weise kann die Dosiereinrichtung 8 mit dem Stirnrad 11 und dem Wälzlager 46 mit den Teilringschalen 47 wahlweise an der einen oder anderen Seitenwand 5 bzw. 6 des Dosierschachtes 3 angeordnet werden, wobei das Lagerteil 39 in die Öffnungen 44 bzw. 43 gleichen Durchmessers der Seitenwände drehfrei eingreift. Ebenso kann die Stelleinrichtung 9 mit den Führungsstangen 24, 25 und 26 wahlweise an der einen oder anderen Seitenwand 5 bzw. 6 montiert werden, wobei die Führung 45 wahlweise in die Öffnung 44 bzw. 43 eingreift. Das Lagerteil 39 und die Führung 45 weisen zu diesem Zweck gleiche Außendurchmesser auf.

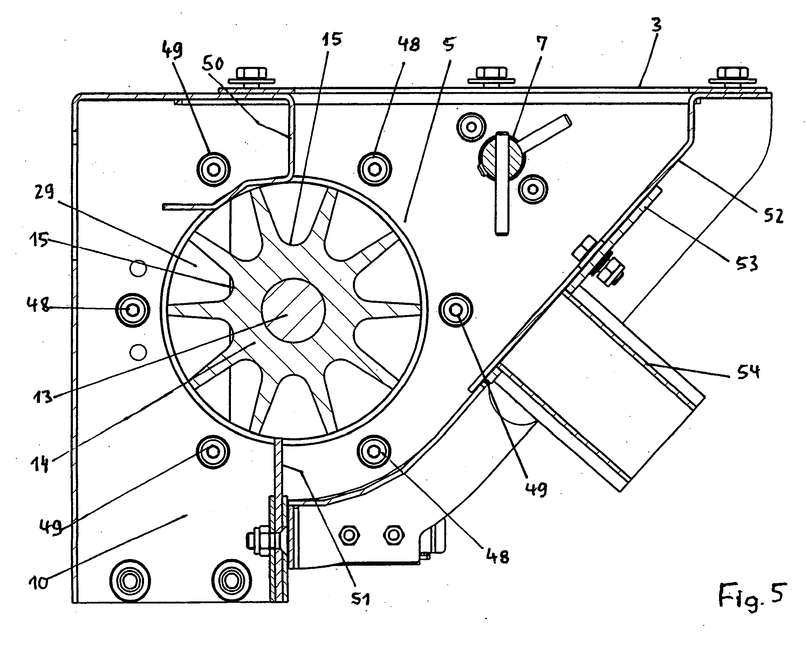

In Fig. 5 und 6 ist erkennbar, dass zwischen dem Dosierschacht 3 und dem Ausbringschacht 10 eine vertikale Trennwand angeordnet ist, die im oberen Abschnitt durch ein starres Wandteil 50 und im unteren Abschnitt von einer gummielastischen, schmalen Leiste 51 gebildet ist. Zwischen dem starren Wandteil 50 und der gummielastischen Leiste 51 läuft das Zellenrad 14 um, wobei die gummielastische Leiste eine die Zellen 15 füllende und zugleich abstreifende Funktion hat. Die gleiche Funktion erfüllt die gummielastische Leiste 51 bezüglich der Dosierrillen 17 der Füllkörper 16, wenn sich diese innerhalb des Dosierschachts 3 befinden.

Der Dosierschacht 3 weist eine geneigte Rückwand 52 auf, deren Neigungswinkel dafür sorgt, dass das Saatgut dem Zellenrad 3 einwandfrei zuläuft. Dies wird noch durch das Rührwerk 7 unterstützt. In der Rückwand befindet sich eine Öffnung, die zum Entleeren des Saatgutbehälters bestimmt ist. Sie ist im Säbetrieb durch einen an der Rückwand 52 gelagerten Drehschieber 53 geschlossen, an dem ein Rohrstutzen 54 angebracht ist. Durch Verstellen des Drehschiebers 53 lässt sich der Rohrstutzen 54 mit der Öffnung in der Rückwand 52 in Flucht bringen, so dass eine Entleerung möglich ist.

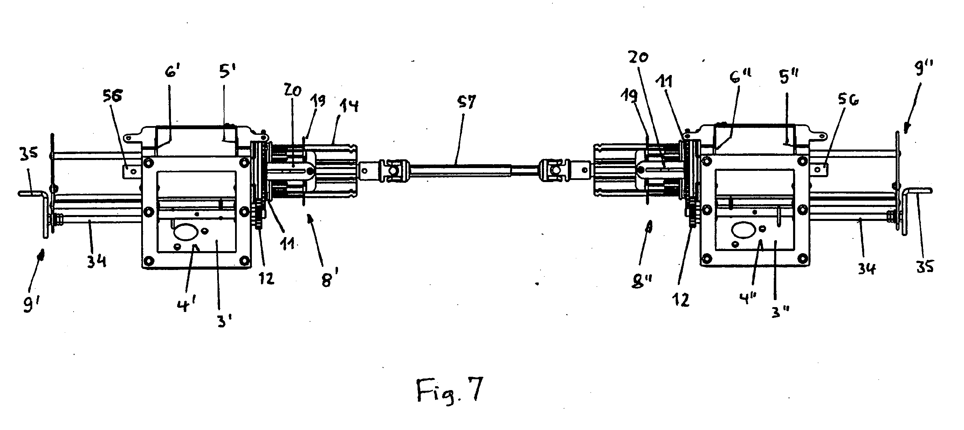

Fig. 7 bis 9 zeigen eine Auswahl der Möglichkeiten zur Kombination von zwei Dosiereinrichtungen 8 und der zugehörigen Stelleinrichtung 9, die aufgrund des wahlweisen Einbaus der Dosiereinrichtung 8 an der einen oder anderen Seite des Dosierschachtes 3 und der Stelleinrichtung 9 vice versa gegeben ist.

Bei der Ausführungsform gemäß Fig. 7 sind zwei Dosierschächte 3' und 3" mit gleicher Ausrichtung der Zulauföffnungen 4', 4" in Reihe angeordnet. Die zugehörigen Dosiereinrichtungen 8' und 8'' sind einander zugekehrt, also in jeweils einander gegenüberliegenden Seitenwänden 5', 6" der Dosierschächte 3', 3'' gelagert. Die Stelleinrichtungen 9' und 9'' sind an den entsprechend gegenüberliegenden Seitenwänden 6' bzw. 5" der Dosierschächte 3' bzw. 3" montiert. Die einander zugekehrten Wellenstümpfe 55 (in Fig. 7 nicht erkennbar) der Dosiereinrichtungen 8' und 8'' sind durch eine Gelenkwelle 57 miteinander verbunden. Der Antrieb erfolgt von einem der Stirnräder 11 her, so dass beide Zellenräder 14 der Dosiereinrichtungen 8', 8'' in gleicher Richtung umlaufen.

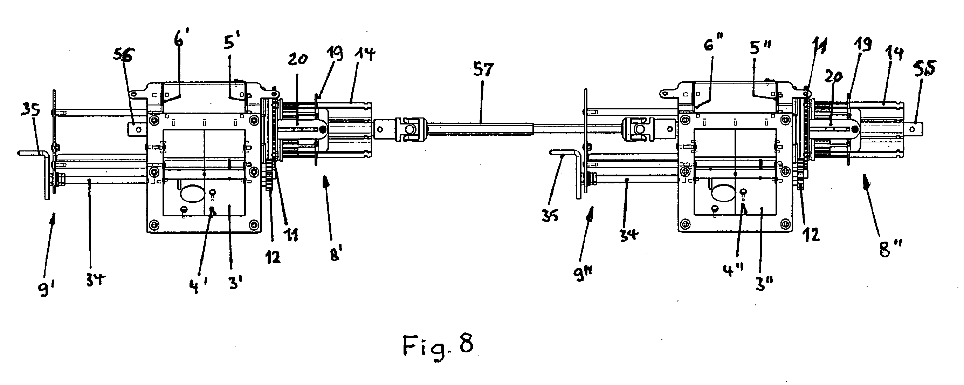

Die Ausführungsform nach Fig. 8 unterscheidet sich von der nach Fig. 7 nur dadurch, dass die Dosiereinrichtungen 8', 8'' an der jeweils gleichen Seite der Dosierschächte 3' und 3" gelagert und die Stelleinrichtungen 9', 9", die gleichfalls an der jeweils gleichen Seitenwand der Dosierschächte 3', 3" angeordnet sind, jeweils von der gleichen Seite her bedienbar sind. In diesem Fall verbindet die Gelenkwelle 57 den das Zellenrad 14 der Dosiereinrichtung 8' überragenden Wellenstumpf .(nicht gezeigt) mit dem die Hülse im Bereich der Stelleinrichtung 9'' überragenden Wellenstumpf (nicht gezeigt). Es sind jeweils nur die Gelenkkupplungen und die Gelenkwelle erkennbar.

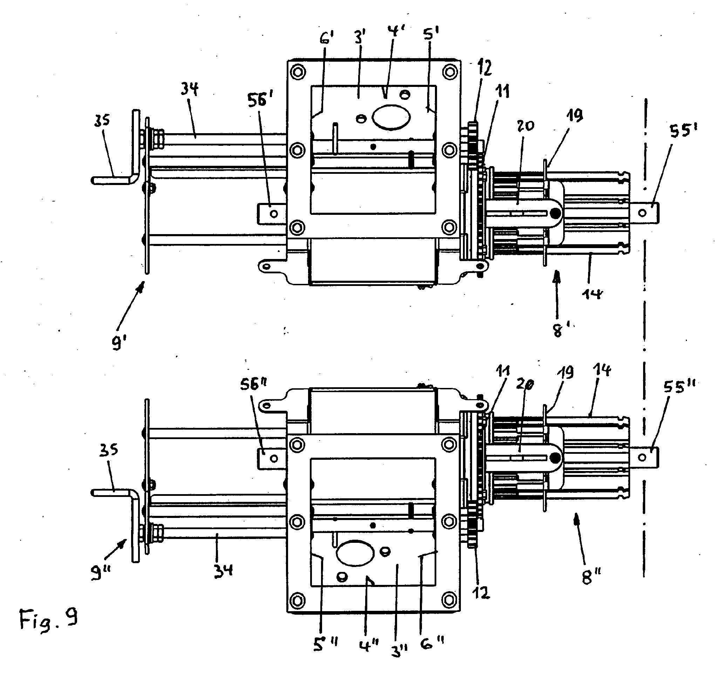

Bei dem Ausführungsbeispiel nach Fig. 9 sind zwei Dosierschächte 3' und 3'' parallel nebeneinander, jedoch in einer einander abgekehrten Position angeordnet. Die Dosiereinrichtungen 8' und 8'' sind in jeweils verschiedenen Seitenwänden 5' bzw. 6" gelagert, während die zugehörigen Stelleinrichtungen 9' und 9" an den entsprechenden Seitenwänden 6' bzw. 5'' angeordnet sind. Die die Zellenräder 14', 14'' der Dosiereinrichtungen 8', 8'' überragenden Wellenstümpfe 55', 55'', weisen Mittel zur direkten oder indirekten Verbindung mit Kupplungsteilen, z.B. je einem Stirnrad für die Drehmomentenübertragung von der einen zur anderen Dosiereinrichtung 8', 8'' auf. Eine solche Kupplung ist in Fig. 9 schematisch mit der strichpunktierten Linie angedeutet.

Statt der Einleitung des Antriebsmomentes über das Stirnrad 11, wie mit Bezug auf Fig. 1, 3 und 4 oder eines der Stirnräder 11 der Fig. 7 bis 9 beschrieben, kann das Antriebsmoment auch wahlweise über den Wellenstumpf 55 oder - unter Zwischenschaltung einer Gelenkwelle - auch über den Wellenstumpf 56 (Fig. 2, 3) auf das Zellenrad 14 der Dosiereinrichtung nach Fig. 1 bis 4 und 7 bis 9 eingeleitet werden. Für den Fall der Einleitung des Drehmomentes über den Wellenstumpf 56 an der Seite der Stelleinrichtung 9 weist die stationäre Platte 27 der Stelleinrichtung 9 eine großflächige Aussparung 58 auf, durch die die Gelenkwelle hindurchgeführt und an den Wellenstumpf 56 angeschlossen wird. Dem gleichen Zweck dient die Aussparung 58 bei der Reihenschaltung gemäß Fig. 8.

Unabhängig von der Art der Einleitung des Drehmoments für das Zellenrad 14 erfüllt das Stirnrad 11 jedenfalls stets die Aufgabe des Ritzels 12 für das Rührwerk 7.

### Bezugszeichenliste

- 1: Zulaufschacht
- 2: Auslauföffnung
- 3: Dosierschacht
- 4: Zulauföffnung
- 5: Seitenwand
- 6: Seitenwand
- 7: Rührwerk
- 8: Dosiereinrichtung
- 9: Stelleinrichtung
- 10: Ausbringschacht
- 11: Stirnrad
- 12: Ritzel
- 13: Welle
- 14: Zellenrad
- 15: Zellen (Normalsaat)
- 15': axiale Länge von 15
- 16: Füllkörper
- 17: Dosierrillen
- 18: Zellenradstege
- 19: Tragring
- 20: Klauen
- 21: Ringnut
- 22: abgefedertes Lager
- 23: Querrillen
- 24: Stange
- 25: Stange
- 26: Stange
- 27: Platte
- 28: Platte
- 29: Hülse
- 30: Öffnung
- 31: Wälzlager
- 32: Wellensicherungsring
- 33: Wälzlager
- 34: Schraubenspindel
- 35: Handhabe
- 36: Spindellager
- 37: Spindelmutter
- 38: Skala
- 39: Lagerteil
- 40: Innenverzahnung
- 41: Mittelsteg
- 42: Seitensteg
- 43: Öffnung in 6
- 44: Öffnung in 5
- 45: Führung
- 46: Wälzlager
- 47: Teilringschalen
- 48: Schrauben
- 49: Schrauben
- 50: Wandteil
- 51: Leiste
- 52: Rückwand
- 53: Drehschieber
- 54: Rohrstutzen
- 55: Wellenstumpf
- 56: Wellenstumpf
- 57: Gelenkwelle
- 58: Aussparung

## Patentansprüche

1. Sämaschine mit einem Saatgutbehälter mit wenigstens einer Auslauföffnung (2), einem daran anschließbaren Dosierschacht (3) und einer in dessen Seitenwänden (5, 6) gelagerten Dosiereinrichtung (8), bestehend aus einem von außerhalb des Dosierschachtes (3) drehangetriebenen, axial verstellbaren Zellenrad (14) zum Dosieren von Normalsaat, dessen Zellen (15) an ihrer im Dosierschacht liegenden Stirnseite durch die Stirnseite einer mit dem Zellenrad (14) axial beweglichen, in der gegenüberliegenden Seitenwand (5) geführten, drehfesten Hülse (29) begrenzt sind, in den Zellen axial verstellbar angeordneten, leistenförmigen Füllkörpern (16), die an ihrem Umfang Dosierrillen (17) zum Dosieren von Feinsaat aufweisen und an der diesseitigen Seitenwand (6) durch ein axialfestes, mitdrehendes Lagerteil (39) mit einer Art Innenverzahnung (40) begrenzt sind, während der stirnseitige Abschluss der Zellen (15) des Zellenrades (14) beim Dosieren von Normalsaat an dieser Seitenwand durch das Lagerteil (39) und den mit ihm etwa bündigen Stirnseiten der Füllkörper (16) gebildet ist, wobei an der dieser Seitenwand gegenüberliegenden Seite eine einzige Stelleinrichtung (9) mit einer Drehmomentstütze (24, 25, 26) zum Dosieren von Normalsaat und Feinsaat vorgesehen ist, die axial auf die Hülse (29) und das Zellenrad (13) wirkt und wahlweise mit einem axialfesten, mitdrehenden Teil an der gegenüberliegenden Seite für die Einstellung der Dosiermenge für Normalsaat oder mit dem Zellenrad (14) zum Mitführen der Füllkörper (16) für die Einstellung der Dosiermenge für Feinsaat kuppelbar ist, **dadurch gekennzeichnet, dass** beide Seitenwände (5, 6) des Dosierschachtes (3) Öffnungen (44, 43) mit gleichem Innendurchmesser für die Lagerung der Hülse (29) bzw. des Lagerteils (39) aufweisen, und dass beide Seitenwände (5, 6) zur wahlweisen Anbringung der wenigstens einen Drehmomentstütze (24, 25, 26) an der einen oder anderen Seitenwand eingerichtet sind und die Dosiereinrichtung (8) wahlweise von der einen Seitenwand (5) oder von der anderen Seitenwand (6) her einbaubar ist.

2. Sämaschine nach Anspruch 1, **dadurch gekennzeichnet, dass** an der Seite der Dosiereinrichtung ein Drehlager, z.B. ein Wälzlager (46), mit Abstand von der Seitenwand (6) vorgesehen ist, dessen feststehender Außenring an der Seitenwand (6) lösbar befestigt ist, und dass die gegenüberliegende Seitenwand (5) des Dosierschachtes (3) symmetrisch angeordnete Befestigungsmöglichkeiten aufweist.

3. Sämaschine nach Anspruch 2, **dadurch gekennzeichnet, dass** der feststehende Außenring des Wälzlagers (46) von Teilringschalen umgriffen ist, die mittels Löcher in der Seitenwand durchgreifender Schrauben (48) lösbar befestigt sind, und dass beide Seitenwände (5, 6) gleiche Lochbilder aufweisen.

4. Sämaschine nach einem der Ansprüche 1 bis 3, **dadurch gekennzeichnet, dass** an der Hülse (29) außerhalb der Seitenwand (5) eine sie umfangsseitig überragende Platte (28) befestigt ist, die auf wenigstens drei radialsymmetrisch angeordneten Stangen (24, 25, 26) mit Spiel geführt ist, dass die Stangen einerseits an der Seitenwand (5) lösbar befestigt sind, andererseits an ihren anderen Enden durch eine Platte (27) verbunden sind, und dass zwischen beiden Platten (27, 28) ein Spindelantrieb (34, 35) zum axialen Verstellen der Hülse (29) und nur des Zellenrades (14) oder des Zellenrades (14) mit den Füllkörpern (16) wirksam ist, wobei die gegenüberliegende Seitenwand (6) gleiche symmetrische Befestigungsmöglichkeiten für die Stangen (24, 25, 26) aufweist.

5. Sämaschine nach Anspruch 4, **dadurch gekennzeichnet, dass** beide Seitenwände (5, 6) drei radialsymmetrisch angeordnete Löcher zum wahlweisen Befestigen der Stangen (24, 25, 26) an der einen oder anderen Seitenwand (5 oder 6) mittels Schrauben (49) aufweisen.

6. Sämaschine nach einem der Ansprüche 1 bis 5, **dadurch gekennzeichnet, dass** die Dosiereinrichtung (8) eine zentrale Welle (13) aufweist, auf der das Zellenrad (14) drehfest sitzt und die die Hülse (29) in Lagern (31, 33) durchgreift und diese (29) sowie an der gegenüberliegenden Seite das Zellenrad (14) mit je einem Wellenstumpf (55, 56) überragt.

7. Sämaschine nach einem der Ansprüche 1 bis 6, **dadurch gekennzeichnet, dass** die Wellenstümpfe (55, 56) mit Mitteln zur wahlweisen Einleitung des Antriebsmoments für das Zellenrad (14) von der einen oder anderen Seite ausgestattet sind.

8. Sämaschine nach Anspruch 6 oder 7, **dadurch gekennzeichnet, dass** die Mittel an den Wellenstümpfen die Antriebsverbindung von einer Dosiereinrichtung zu einer entsprechend ausgebildeten Dosiereinrichtung (8) in Reihen- oder Parallelschaltung ermöglichen.

9. Sämaschine nach Anspruch 8, **dadurch gekennzeichnet, dass** für eine Parallelschaltung zweier Dosiereinrichtungen (8', 8'') zwischen deren Wellenstümpfen (55', 55'') eine Kupplung, z.B. ein Stirnradgetriebe, vorgesehen ist.

10. Sämaschine nach Anspruch 9, **dadurch gekennzeichnet, dass** die Kupplung so ausgebildet ist, dass die Zellenräder (14) der parallel angeordneten Dosiereinrichtungen (8', 8'') gleich- oder gegensinnig drehen.

11. Sämaschine nach Anspruch 8, **dadurch gekennzeichnet, dass** bei einer Reihenschaltung eine die Wellenstümpfe (55 und/oder 56) der Wellen (13) der beiden Dosiereinrichtungen (8) verbindende Gelenkwelle (57) vorgesehen ist.

12. Sämaschine nach einem der Ansprüche 1 bis 11, **dadurch gekennzeichnet, dass** die Welle (13) einerseits in dem außenliegenden Wälzlager (46), andererseits nahe ihrem Wellenstumpf (56) an der gegenüberliegenden Seite in einem Wälzlager (31) in der Hülse (29) gelagert ist.

13. Sämaschine mit einem Saatgutbehälter mit wenigstens einer Auslauföffnung (2), einem daran anschließbaren Dosierschacht (3) und einer in dessen Seitenwänden (5, 6) gelagerten Dosiereinrichtung (8), insbesondere nach einem der Ansprüche 1 bis 12, **dadurch gekennzeichnet, dass** die Auslauföffnung (2) einen quadratischen Querschnitt und der Dosierschacht (3) eine Zulauföffnung (4) mit gleichem quadratischen Querschnitt aufweist.

14. Sämaschine nach Anspruch 13 mit einem Saatgutbehälter, der zwei trichterförmige sich zu je einer Auslauföffnung verjüngende Behälterteile aufweist, **dadurch gekennzeichnet, dass** beide Auslauföffnungen quadratischen Querschnitt aufweisen und je ein Dosierschacht mit quadratischer Zulauföffnung wahlweise mit der einen oder anderen Auslauföffnung unter Abgabe der dosierten Saat nach jeweils gegenüberliegenden Seiten oder nach nur einer Seite verbindbar ist.

15. Sämaschine mit einem Saatgutbehälter mit wenigstens einer Auslauföffnung (2), einem daran anschließbaren Dosierschacht (3) und einer in dessen Seitenwänden (5, 6) gelagerten Dosiereinrichtung (8), bestehend aus einem von außerhalb der einen Seitenwand (6) drehangetriebenen; axial verstellbaren Zellenrad (14) zum Dosieren von Normalsaat und in dessen Zellen (15) verschieblichen, leistenförmigen Füllkörpern (16), die an ihrem Umfang Dosierrillen zum Dosieren von Feinsaat aufweisen, insbesondere nach einem der Ansprüche 1 bis 14, **dadurch gekennzeichnet, dass** jeder Füllkörper (16) einen Mittelsteg (41) mit einem auf dem kopfseitigen Umfang der Stege (18) der Zellen (15) des Zellenrades (14) liegenden Umfang und zu beiden Seiten des Mittelstegs (41) eine Dosierrille (17) aufweist.

16. Sämaschine nach Anspruch 15, **dadurch gekennzeichnet, dass** jeder Füllkörper (16) die Dosierrillen (17) an der dem Mittelsteg (41) abgekehrten Seite begrenzende schmale Seitenstege (42) aufweist und dass jeder Seitensteg (42) dem Steg (18) einer Zelle (15) des Zellenrades (14) bis zum Umfang anliegt, so dass die schmalen Seitenstege (42) der Dosierrillen (17) benachbarter Füllkörper (16) mit dem zwischen ihnen befindlichen Steg (18) der Zellen (15) des Zellenrades (14) gemeinsam einen Trennsteg für benachbarte Dosierrillen (17) von benachbarten Füllkörpern (16) bilden.

17. Sämaschine nach Anspruch 15 oder 16, **dadurch gekennzeichnet, dass** die kopfseitige Breite des Mittelstegs (41) einerseits und die Summe der kopfseitigen Breite der Stege (18) des Zellenrades (13) und der diesen beidseitig anliegenden schmalen Seitenstege (42) der Füllkörper (16) andererseits etwa gleich groß sind.

18. Sämaschine nach einem der Ansprüche 15 bis 17, **dadurch gekennzeichnet, dass** die Öffnungsweite jeder Dosierrille (17) schmaler ist als die kopfseitige Breite des Mittelstegs (42) des Füllkörpers (16).
